Europäisches Patentamt

European Patent Office

Office européen des brevets

(11) Veröffentlichungsnummer: **0 224 803**
**A1**

(12) # EUROPÄISCHE PATENTANMELDUNG

(21) Anmeldenummer: 86116046.3

(22) Anmeldetag: 20.11.86

(51) Int. Cl.⁴: **A01F 12/40**

(30) Priorität: 02.12.85 US 803370

(43) Veröffentlichungstag der Anmeldung:
10.06.87 Patentblatt 87/24

(84) Benannte Vertragsstaaten:
**BE DE ES FR GB IT**

(71) Anmelder: **DEERE & COMPANY**
**1 John Deere Road**
**Moline Illinois 61265(US)**

(72) Erfinder: **Schraeder, John Anthony**
**900 - 5th Avenue**
**Silvis Illinois 61282(US)**
Erfinder: **Boehler, William Marcus**
**4339 - 5th Street**
**East Moline Illinois 61244(US)**
Erfinder: **Kester, Philip C.**
**2822 Jean Street**
**East Moline Illinois 61244(US)**

(74) Vertreter: **Sartorius, Peter**
**DEERE & COMPANY European Office, Patent**
**Department Postfach 503 Steubenstrasse**
**36-42**
**D-6800 Mannheim 1(DE)**

(54) **Mähdrescher.**

(57) Ein Mähdrescher weist im Bereich des Auslaufendes der Strohhaube eine Häckselvorrichtung (32) auf, die an zwei Schienen (44, 46) horizontal verschiebbar gelagert ist. Zur Verstellung der Häckselvorrichtung (32) ist diese mit einer endseitig je ein Zahnrad (138) aufweisenden Welle (132) ausgerüstet, über die die Häckselvorrichtung (32) horizontal verschoben werden kann.

Fig. 2

EP 0 224 803 A1

## Mähdrescher

Die Erfindung bezieht sich auf einen Mähdrescher mit einer am Auslaufende der Strohhaube vorgesehenen Häckselvorrichtung, die in Schienen zumindest zwischen einer Arbeitsstellung und einer Ruhestellung verschiebbar gelagert und feststellbar angeordnet ist.

Es ist bereits ein Mähdrescher mit einer Häckselvorrichtung bekannt (US-A-2 862 536), die am Auslaufende der Strohhaube zwei mit Abstand zueinander angeordnete, horizontal verlaufende Gleitschienen aufweist, in denen die Häckselvorrichtung zwischen einer Arbeitsstellung und einer Ruhestellung verstellbar ist. In der Ruhestellung wird die Häckselvorrichtung über das hintere Ende der Strohhaube hinaus verschoben, so daß es am Ende der Strohhaube hervorsteht. Die Häckselvorrichtung läßt sich mittels einer Klemmvorrichtung zumindest in der Arbeitsstellung festsetzen. Da die Häckselvorrichtung aufgrund der Schneidwerkstrommel und der aufwendigen Rahmenkonstruktion relativ schwer ist, ist ein Verschieben der Häckselvorrichtung in der Gleitvorrichtung äußerst mühsam.

Demgegenüber liegt der Erfindung die Aufgabe zugrunde, die Häckselvorrichtung derart anzuordnen und zu lagern, daß sie mit relativ geringem Kraftaufwand zwischen verschiedenen Positionen am Mähdrescher verstellbar ist. Diese Aufgabe ist dadurch gelöst worden, daß die Häckselvorrichtung zu ihrer Verstellung Antriebsmittel aufweist, die zumindest ein drehbares, mit zumindest einer der Schienen in Eingriff bringbares Antriebselement aufweisen. Durch die vorteilhafte Anordnung der Schienen in Verbindung mit den Antriebsmitteln läßt sich auch eine relativ schwere Häckselvorrichtung durch eine Bedienungsperson ohne weiteres verstellen, zumal die parallel zueinander verlaufenden Schienen eine gute Führung der Häckselvorrichtung gewährleisten, so daß ein Verkanten der Häckselvorrichtung innerhalb der Schie nen ausgeschaltet wird. Hierzu ist es vorteilhaft, daß die Antriebsmittel endseitig Zahnräder aufweisen, die mit in den Schienen vorgesehenen Öffnungen zusammenwirken, so daß durch Drehen der Welle ein einfaches Verstellen der Häckselvorrichtung zwischen einer Ruhestellung und einer Arbeitsstellung möglich ist. Da beiderseits der Welle die Zahnräder vorgesehen sind, wird eine genaue Führung der Häckselvorrichtung in den Schienen gewährleistet, ohne daß ein Schrägstellen bzw. ein Verkanten der Häckselvorrichtung innerhalb der Schienen zu befürchten ist.

Da die Welle sowie die Zahnräder unterhalb der Schienen angeordnet sind, werden diese weitgehend vor Verunreinigungen geschützt. Dabei können an den äußeren Enden der Schienen Schutzkappen zusätzlich vorgesehen sein, die verhindern, daß die Bedienungsperson in die Zahnräder eingreift. Eine einwandfreie Führung der Häckselvorrichtung wird dadurch gewährleistet, daß die an der Häckselvorrichtung angeordneten winkelförmigen Flansche in den mit Abstand zueinander angeordneten Zwischenräumen der beiden Flansche, die an der Haube des Mähdreschers angeordnet sind, aufgenommen sind. Durch die zahlreichen Öffnungen, die in den Schienen vorgesehen sind, läßt sich die Häckselvorrichtung in jeder beliebigen Stellung festsetzen. Ein genaues Festsetzen der Häckselvorrichtung in den Schienen wird dadurch erreicht, daß die Zahnräder in ihrer Endlagestellung mit einem Zahn gegen die Oberfläche der Unterseite der Schiene anliegen, so daß hierdurch eine weitere Verstellung der Häckselvorrichtung in der Schiene verhindert wird.

Das eine Ende der Schiene kann in vorteilhafter Weise mit parallel zueinander verlaufenden Flächen zur Aufnahme eines Schlüssels bzw. einer Kurbel versehen sein, so daß die Bedienungsperson die Welle zur Verstellung der Häckselvorrichtung mit sehr geringem Kraftaufwand drehen kann. Die Schienen können in vorteilhafter Weise horizontal verlaufend an geordnet sein. Es ist jedoch auch möglich, die Schienen auf einer geneigt verlaufenden Ebene vorzusehen, so daß eine Verstellung der Häckselvorrichtung aus der Ruhestellung in die Arbeitsstellung wesentlich leichter ist. Damit in der Ruhestellung die am Ende der Häckselvorrichtung vorgesehene Leitvorrichtung nicht am hinteren Ende der Haube des Mähdreschers hervorsteht, ist diese in vorteilhafter Weise ebenfalls an der Häckselvorrichtung angeordnet und mit dieser gemeinsam verstellbar. Das Gehäuse der Häckselvorrichtung ist in vorteilhafter Weise derart verlängert, daß ein Teil des vorderen Endes des Gehäuses als Leitblech ausgebildet ist, das bis an das Auslaufende des Hordenschüttlers heranreicht.

Die Leitvorrichtung kann mittels eines Gestänges am Gehäuse der Häckselvorrichtung angeschlossen sein, das zur Verstellung der Leitvorrichtung an verschiedene Anschlußbohrungen anschließbar ist, so daß in der Arbeits-und in der Ruhestellung der Häckselvorrichtung die Leitvorrichtung gleichzeitig auch dafür sorgt, daß das gehäckselte bzw. das nicht gehäckselte Stroh in einem Schwad abgelegt werden kann und in der Ruhestellung nicht in die Laufräder des Mähdreschers gelangt.

Im folgenden wird die Erfindung anhand von lediglich einen Ausführungsweg darstellenden Zeichnungen näher erläutert. Es zeigt:

Fig. 1 das hintere Ende eines Mähdreschers mit einer Häckselvorrichtung,

Fig. 2 eine perspektivische Darstellung der Unterseite der Häckselvorrichtung,

Fig. 3 einen Schnitt entlang der Linie 3 -3 gemäß Fig. 2,

Fig. 4 einen Schnitt entlang der Linie 4 -4 gemäß Fig. 3, bei der sich die Häckselvorrichtung in einer vorderen Stellung befindet, die der Arretierungsstellung entspricht.

In der Zeichnung ist mit 10 der hintere Gehäuseteil eines in der Zeichnung der Einfachheit halber nicht weiter dargestellten Mähdreschers bezeichnet, der sich auf hinteren Laufrädern 12 abstützt und in dem ein Hordenschüttler 14 sowie unterhalb des Hordenschüttlers ein Rücklaufboden 16 angeordnet sind, der das ausgedroschene Erntegut einer Reinigungsvorrichtung zuführt, die aus den Reinigungssieben ·18 und 20 gebildet ist.

Das hintere Ende des Gehäuseteils 10 weist eine Haube 22 auf, die aus Seitenteilen 24, 26 und einer Rückwand 28 gebildet ist. Die Haube 22 ist nach unten hin offen, so daß sie das von dem Hordenschüttler 14 abgegebene Stroh gemäß Pfeil 30 einer im unteren Bereich der Haube 22 vorgesehenen Häckselvorrichtung 32 zuführt. Die Häckselvorrichtung 32 lagert in den Seitenteilen 24 und 26 der Haube 22 und wird über eine Antriebsvorrichtung, insbesondere ein Zugmittelgetriebe 34, angetrieben, das auf der linken Seite des Gehäuseteils 10 vorgesehen ist.

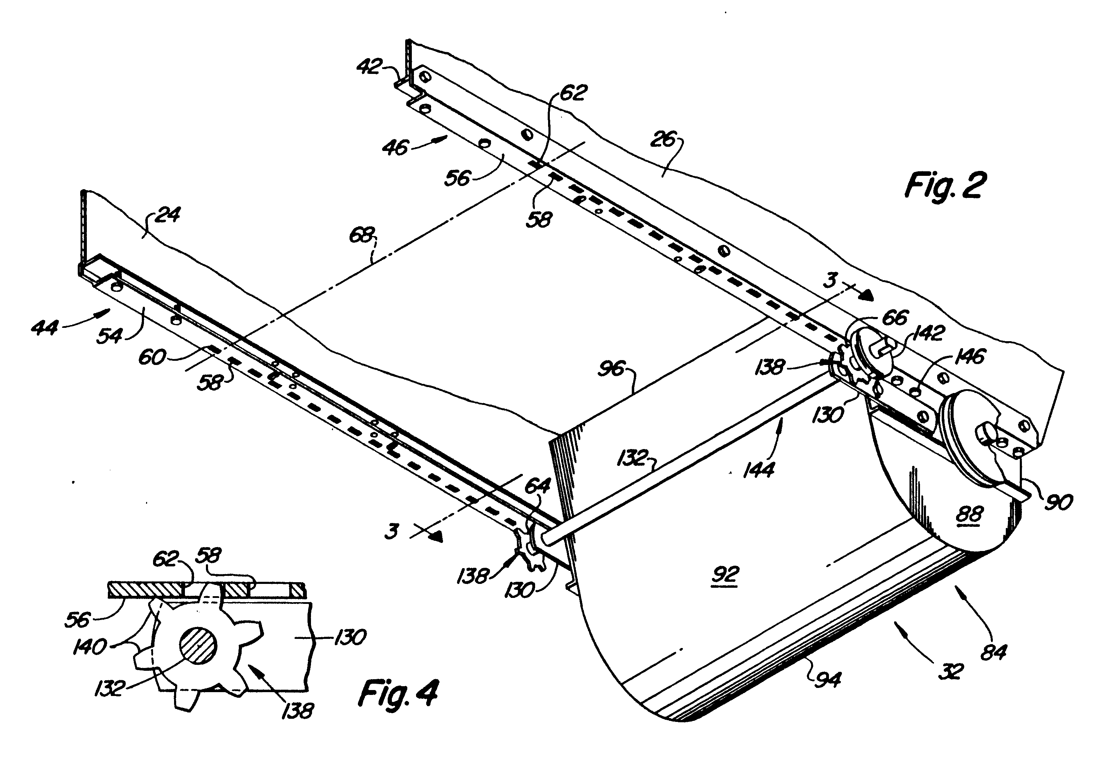

Die einzelnen Arretierungselemente an der Haube 22 sind im Detail in Fig. 2 und 3 veranschaulicht. Die gegenüberliegenden unteren Kanten der Seitenteile 24 und 26 liegen in einer horizontalen Ebene, und eine jede Kante ist mit einem nach innen gerichteten Winkelflansch 40 und 42 versehen. Ferner sind an den Seitenteilen 24 und 26 rechte und linke winkelförmige Schienen 44 und 46 mittels Schraubenbolzen 48 befestigt. Eine jede Schiene 44 bzw. 46 ist mit geringfügigem Abstand zu der unteren Flanschseite des Flansches 40 und 42 angeordnet, so daß zwischen den Flanschen eine Führungsfläche 50 und 52 gebildet wird. Hierzu weisen die winkelförmigen Schienen 44 und 46 horizontal verlaufende Flansche 54 und 56 auf, die mit zahlreichen hintereinander angeordneten rechteckförmigen Öffnungen 58 versehen sind. Im eingebauten Zustand liegen zumindest die vordersten Öffnungen 60 und 62 sowie die hintersten Öffnungen 64 und 66 auf einer gleichen Querebene, die durch eine Linie 68 gemäß Fig. 2 gekennzeichnet ist. Unterhalb des 7interen Endes des Hordenschüttlers 14 befindet sich ein Leitblech 70, das in etwa die gesamte Breite der Haube 22 überspannt und mit den beiden äußeren Kanten an die Seitenteile 24 und 26 der Haube 22 angeschlossen ist.

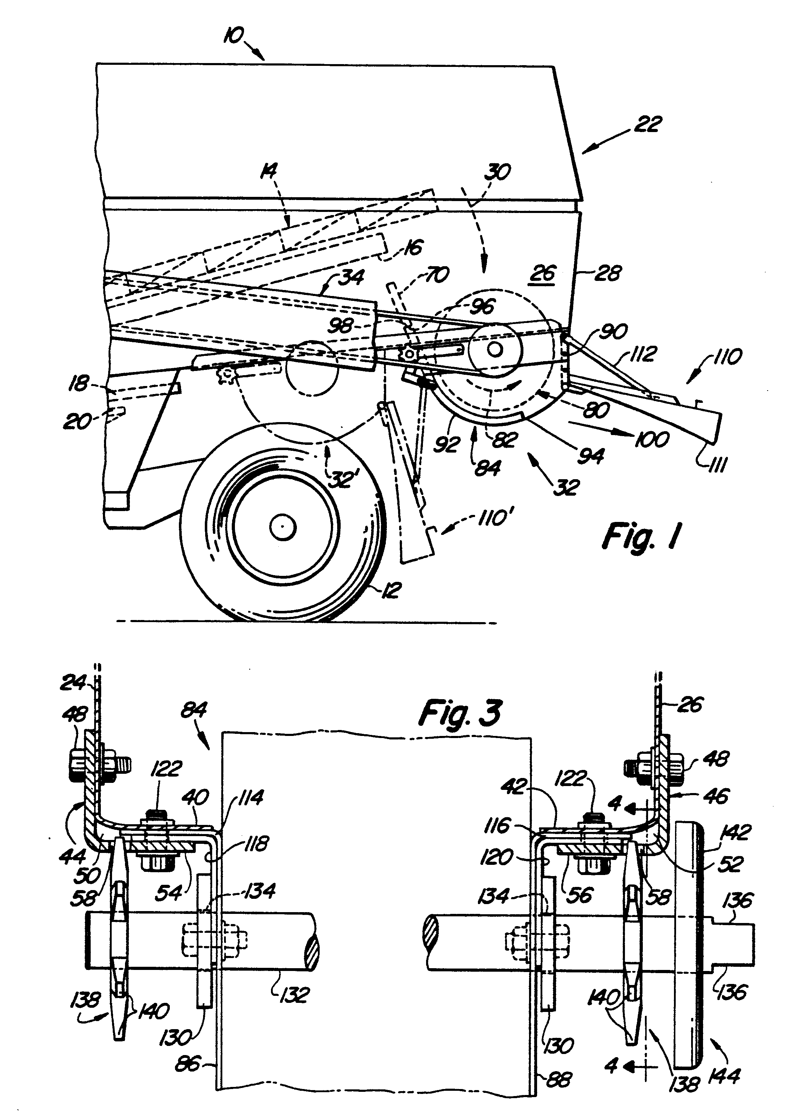

Die Häckselvorrichtung 32 besteht aus einer Häckseltrommel 80, die über das Zugmittelgetriebe 34 gemäß Pfeil 82 angetrieben wird. Die Häckseltrommel 80 wird teilweise von einem Gehäuse 84 umgeben, das endseitig durch rechte und linke Seitenwände 86 und 88 begrenzt wird, wobei die hintere obere Kante des Gehäuses 84 in eine vertikal verlaufende Rückwand 90 mit einer Durchlaßöffnung übergeht, die gerade verläuft. Das Gehäuse 84 besteht aus einem gewölbten Boden 92, der dem Radius der Häckseltrommel 80 angepaßt ist und diese teilweise umgibt. Der Boden 92 weist im Bereich des Auslaßendes eine Kante 94 auf und im Bereich des Einlaßendes eine obere Kante 96, die mit der unteren Kante 98 des Leitbleches 70 zusammenwirkt bzw. an diese anstößt. Befindet sich die Häckselvorrichtung 32 in ihrer hinteren Stellung, d. h. Betriebsstellung gemäß Fig. 1, so bilden das Leitblech 70 sowie der Boden 92 eine durchgehende Führungsfläche, über die das vom Hordenschüttler 14 abgegebene Stroh über die Häckselvorrichtung 32 gemäß Pfeil 100 ausgetragen wird.

Eine Leitelemente aufweisende Leitvorrichtung 110 befindet sich am hinteren Ende der Rückwand 90 der Häckselvorrichtung 32 und ist so angeordnet, daß das von der Häckselvorrichtung abgegebene Stroh nach unten geleitet und infolge der divergierend verlaufenden Leitelemente 111 - schwadförmig abgelegt wird, wobei der Schwad eine größere Breite aufweisen kann als die Breite des Mähdreschers. Die Leitvorrichtung 110 ist gelenkig an die Rückwand 90 angeschlossen und über ein Gestänge 112 mit dieser zusätzlich verbunden. An der Rückwand 90 sind zahlreiche Anschlußbohrungen für das Gestänge 112 vorgesehen, so daß durch Umhängen des Gestänges 112 die Winkellage der Leitvorrichtung 110 verändert werden kann.

Die oberen Kanten der Seitenwände 86 und 88 sind rechtwinklig abgewinkelt und bilden Flansche 114 und 116, die durch Flansche 118 und 120 von zusätzlichen Winkelstreben verstärkt werden, die mit den Seitenwänden 86 und 88 verbunden sind, beispielsweise mittels Punktschweißung. Um die Häckselvorrichtung 32 an der Haube 22 aufzuhängen, sind die Flansche beiderseits auf den Führungsflächen 50 und 52 abgestützt, so daß die Häckselvorrichtung 32 auf den Flanschen 54 und 56 der Schienen 44 und 46 verschoben werden und mittels Schraubenbolzen 122 (siehe Fig. 3) in jeder gewünschten Stellung festgestellt werden kann.

Auf jeder Seite der Häckselvorrichtung 32 im Bereich der Flansche 114 und 116 ist jeweils ein Träger 130 vorgesehen, der ebenfalls über Schraubenbolzen mit dem Flansch 118, 120 verbunden sein kann. Die beiden Träger 130 beiderseits der Seitenwände 86 und 88 dienen zur Aufnahme einer Welle 132, die sich durch in den Trägern 130 vorgesehene Bohrungen 134 erstreckt. Das linke Ende der Welle 132 erstreckt sich über den Seitenteil 26 hinaus und ist mit zwei parallel zueinander verlaufenden Flächen 136 versehen (siehe Fig. 3). Auf dem äußeren linken und rechten Ende der Welle 132 ist je ein Zahnrad 138 vorgesehen und fest mit der Welle 132 verbunden, wobei die Zähne 140 einen derart großen Abstand untereinander aufweisen, daß sie mit den Öffnungen 58 der Schienen 44 und 46 in Eingriff gebracht werden können. Die Zahnräder 138 sind gleich ausgebildet und die Träger 130 so ausgerichtet, daß sie auf der gleichen Querebene mit den einzelnen Öffnungen 58 in Eingriff gebracht werden können (siehe Fig. 3). Auf dem äußeren Ende der rechten Welle 132 befindet sich eine Schutzscheibe 142, die ein ungehindertes Zugreifen zum Zahnrad 138 verhindert. Die Welle 132 mit dem Zahnrad 138 und dem Schutzschild 142 ist beweglich angeordnet. Die gesamte Anordnung ist durch 144 gekennzeichnet.

Im zusammengebauten Zustand wird die Häckselvorrichtung 32 ohne die Anordnung 144 in den Schienen 44 und 46 aufgenommen und so weit nach vorne verstellt, daß die Anordnung 144 mittels der Träger 130 an die Seitenwände 86 und 88 der Häckselvorrichtung angeschlossen werden kann. Dabei liegen die gegenüberliegenden Zahnräder 138 auf der gleichen Querebene und greifen in die Öffnungen 58 der Schienen 44 und 46 ein.

Im Arbeitseinsatz wird die Häckselvorrichtung 32 in die jeweils gewünschte Position verstellt, und zwar in die in Fig. 1 in gestrichelten Linien dargestellte Stellung oder in die in ausgezogenen Linien dargestellte hintere Stellung der Häckselvorrichtung. In gestrichelten Linien ist die Häckselvorrichtung mit 32' gekennzeichnet. Eine Verstellung der Häckselvorrichtung 32 kann dadurch ermöglicht werden, daß ein Schraubenschlüssel auf die Flächen 136 der Welle 132 aufgesetzt wird, so daß dann die Welle entsprechend gedreht werden kann. Durch Drehen der Welle 132 greifen die Zähne 140 des Zahnrades 138 in die entsprechenden Öffnungen 58 ein. Da beide Zahnräder 138 mit den winkelförmigen Schienen 44 und 46 zusammenwirken, kann verhindert werden, daß die Häckselvorrichtung 32 sich in den Schienen 44 und 46 schräg stellt. Eine anfängliche Schrägstellung der Häckselvorrichtung 32 kann ebenfalls ausgeglichen werden, indem die Welle 132 gedreht wird. In den beiden in Fig. 1 dargestellten Endstellungen der Häckselvorrichtung 32 kann diese mittels Schraubenbolzen 122 entsprechend gesichert werden (siehe Fig. 3).

Die einzelnen Öffnungen 58 in den Schienen 44 und 46 bilden insgesamt eine Länge, die ausreicht, um die Häckselvorrichtung 32 zwischen einer Arbeitsstellung und einer Ruhestellung zu verstellen, in der das Erntegut ohne weiteres an der Häckselvorrichtung 32 vorbeigeführt und auf dem Boden abgelegt werden kann. Die korrespondierenden seitlich zueinander ausgerichteten Öffnungen 60, 62 und 64, 66 sind so angeordnet, daß in beiden Richtungen die Zähne 140 von unten her in die Öffnungen der Flansche 54 und 56 eingreifen - (siehe Fig. 4), wobei in jeweils der äußersten Stellung ein Zahn 140 des Zahnrades 138 gegen die Unterseite des Flansches 56 anliegt und eine Weiterbewegung der Häckselvorrichtung verhindert, so daß nunmehr der Schraubenbolzen 122 ohne weiteres eingesetzt werden kann. Die genaue Ausrichtung der Häckselvorrichtung 32 läßt sich mittels eines Schlüssels ohne weiteres von einer Bedienungsperson von einer Seite her vornehmen.

Nachdem die Häckselvorrichtung 32 entsprechend montiert und ausgerichtet ist, wird die Anordnung 144 mit dem Zahnrad 138 angebaut, so daß die Zähne 140 in die Öffnungen 58 der Schienen 44 und 46 eingreifen können. Durch die feste Verbindung der Zahnräder 138 mit der Welle 132 wird die Häckselvorrichtung 32 stets genau in den Schienen 44 und 46 ausgerichtet, wenn sie verstellt wird, ganz gleich ob die Verstellung über einen Schraubenschlüssel oder durch einfaches Weiterschieben der Häckselvorrichtung geschieht. Die einfache Verstellung der Häckselvorrichtung 32 auf den Schienen 44 und 46 mag dann besonders vorteilhaft sein, wenn die Häckselvorrichtung in ihre hintere Stellung verstellt werden soll, da die beiden Schienen 44 und 46 auf einer geneigt verlaufenden Ebene verlaufen. Durch die feste Verbindung der Zahnräder 138 mit der Welle 132 und durch den exakten Eingriff der Zähne 140 in die Öffnungen 58 wird ein Verkanten der Häckselvorrichtung 32 in den Schienen 44 und 46 ausgeschaltet.

Mit der vorliegenden Erfindung wird eine einfache und schnelle Verstellung der Häckselvorrichtung auf den winkelförmigen Schienen 44 und 46 ohne weiteres ermöglicht. Eine einzelne Bedienungsperson kann die relativ - schwere Häckselvorrichtung von einer Stellung in eine andere Stellung ohne weiteres verstellen, weil die Zahnräder 138 eine einwandfreie Führung der Häckselvorrichtung auf den Schienen gewährleisten, ohne daß sich die Häckselvorrichtung verkantet. Eine derartige Stellvorrichtung ist sehr einfach und kostengünstig, da mit relativ wenig Bauteilen ausgekommen werden kann. Ferner dienen die einzelnen Öffnungen 58 in den Schienen 44 und 46 auch als Tragvorrichtung für die Häckselvorrichtung 32. Durch die vorteilhafte Anordnung der Zahnräder 138 unterhalb der Schienen 44 und 46 wird verhindert, daß sich in den einzelnen Teilen Strohreste ansammeln. Dabei ist es vorteilhaft, daß die Leitvorrichtung 110 vollständig von der Häckselvorrichtung 32 getragen wird. In Arbeitsstellung befindet sich die Häckselvorrichtung 32 in der hintersten Stellung - (siehe ausgezogene Linien gemäß Fig. 1), wobei die Leitvorrichtung 110 in etwa in einer horizontal verlaufenden Ebene verläuft und sich mittels des Gestänges 112 ohne weiteres verstellen lassen kann, um somit den Schwad zu beeinflussen. In der vorderen in gestrichelten Linien dargestellten Stellung der Häckselvorrichtung 32' wird das Leitelement 111 gemäß Fig. 1 nach unten geklappt, so daß ein ungehinderter Austrag des Strohs von dem Hordenschüttler 14 möglich ist.

**Ansprüche**

1. Mähdrescher mit einer am Auslaufende der Strohhaube vorgesehenen Häckselvorrichtung (32), die in Schienen (44, 46) zumindest zwischen einer Arbeitsstellung und einer Ruhestellung verschiebbar gelagert und feststellbar angeordnet ist, dadurch gekennzeichnet, daß die Häckselvorrichtung (32) zu ihrer Verstellung Antriebsmittel aufweist, die zumindest ein drehbares, mit zumindest einer der Schienen in Eingriff bringbares Antriebselement aufweisen.

2. Mähdrescher nach Anspruch 1, dadurch gekennzeichnet, daß die Antriebsmittel eine Welle - (132) mit endseitig angeordneten Zahnrädern - (138) aufweisen, deren Zähne (140) in in den Schienen (44, 46) vorgesehenen Öffnungen (58) eingreifen.

3. Mähdrescher nach Anspruch 1, dadurch gekennzeichnet, daß die Zahnräder (138) beiderseits der Häckselvorrichtung (32) auf derselben Querebene (68) angeordnet sind und gleichzeitig in die Öffnungen (58) eingreifen, so daß die Häckselvorrichtung (32) rechtwinklig zu den Schienen (44, 46) ausgerichtet und geradlinig verstellbar ist.

4. Mähdrescher nach Anspruch 2, dadurch gekennzeichnet, daß die Zahnräder (138) fest mit der Welle (132) verbunden sind und innerhalb der seitlichen Begrenzung der Schienen (44, 46) liegen und mittels je eines Schutzschildes (142) abgedeckt sein können.

5. Mähdrescher nach Anspruch 4, dadurch gekennzeichnet, daß die Zahnräder (138) unterhalb der Schienen (44, 46) auf der Welle angeordnet sind.

6. Mähdrescher nach Anspruch 1, dadurch gekennzeichnet, daß die Schiene (44, 46) als Winkelschiene ausgebildet ist, deren vertikal verlaufender Flansch über Schraubenbolzen (48) an Seitenteilen (24, 26) der Strohhaube bzw. des Gehäuseteils - (10) des Mähdreschers angeschlossen ist.

7. Mähdrescher nach Anspruch 6, dadurch gekennzeichnet, daß die untere Kante des Gehäuseteils (10) einen horizontal verlaufenden Flansch (40) aufweist, der mit Abstand zum horizontal verlaufenden Flansch der Schiene (44 bzw. 46) angeordnet ist, so daß in dem Zwischenraum zwischen den beiden Flanschen ein horizontal verlaufender Flansch (114, 116) einer Winkelhalterung verschiebbar aufgenommen ist, die mit dem Gehäuse (84) der Häckselvorrichtung (32) verbunden ist.

8. Mähdrescher nach einem oder mehreren der vorherigen Ansprüche, dadurch gekennzeichnet, daß die Häckselvorrichtung (32) in mindestens zwei Stellungen feststellbar ist und hierzu die Flansche - (40, 42) zur verschiebbaren Aufnahme der Häckselvorrichtung (32) sowie des Flansches (54, 56) der Schiene (44, 46) Durchdringungen zur Aufnahme von Schraubenbolzen (122) aufweisen.

9. Mähdrescher nach Anspruch 2, dadurch gekennzeichnet, daß jeweils ein Zahn (140) des Zahnrades (138) in der jeweiligen Endlagestellung der Häckselvorrichtung (32) gegen die Unterseite des die Öffnungen (58) aufweisenden Flansches (54, 56) und ein Zahn gegen die mit Bezug auf die Bewegungsrichtung des Zahnrades (138) hintere Kante der Öffnung (60, 62) anliegt und dabei eine weitere Verstellung der Häckselvorrichtung (32) verhindert.

10. Mähdrescher nach einem oder mehreren der vorherigen Ansprüche, dadurch gekennzeichnet, daß zumindest das eine äußere Ende der Welle (132) mit parallel zueinander verlaufenden Flächen (136) versehen ist.

11. Mähdrescher nach einem oder mehreren der vorherigen Ansprüche, dadurch gekennzeichnet, daß am Auslaufende des Gehäuses (84) der Häckselvorrichtung (32) eine Leitvorrichtung (110) angeordnet und mit der Häckselvorrichtung (32) verschiebbar ist.

12. Mähdrescher nach Anspruch 11, dadurch gekennzeichnet, daß die Leitvorrichtung (110) mittels eines Gestänges (112) an der Häckselvorrichtung (32) zusätzlich abgestützt ist, das an verschiedene am Gehäuse (84) der Häckselvorrichtung (32) vorgesehene Bohrungen anschließbar ist und die Leitvorrichtung in verschiedenen Positionen abstützt.

Fig. 1

Fig. 3

42

46

56

58

62

26

*Fig. 2*

24

68

3

44

54

60

58

66 142

146

96

138

130

64

132

144

88

90

3

138

130

92

32

84

94

56

62 58

140

130

132

138

*Fig. 4*

0 224 803

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | US-A-2 862 536 (A.B. GRÖNBERG) <br> * Spalte 6, Zeile 47 - Spalte 7, Zeile 1 * | 1 | A 01 F 12/40 |
| | --- | | |
| A | US-A-3 712 309 (R.B. SCHMITZ) <br> * ganzes Dokument * | 1 | |
| | ----- | | |

| RECHERCHIERTE SACHGEBIETE (Int. Cl.4) |
|---|
| A 01 F 12/00 <br> A 01 F 29/00 <br> A 01 D 50/00 |

Der vorliegende Recherchenbericht wurde für alle Patentansprüche erstellt.

| Recherchenort | Abschlußdatum der Recherche | Prüfer |
|---|---|---|
| BERLIN | 10-02-1987 | SAMWEL P.N. |